# EUROPEAN PATENT APPLICATION

(11) **EP 4 611 268 A1**
(43) Date of publication of application: **03.09.2025**
(21) Application number: 23882766.1
(22) Date of filing: 27.10.2023
(51) Int. Cl.: H04B 1/38, H01Q 1/24, H01Q 9/16, H04B 7/06

(54) **WIRELESS DEVICE**

(30) Priority: 27.10.2022 JP 2022172180
(71) Applicant: PicoCELA Inc., Tokyo 103-0013 (JP)
(72) Inventor: FURUKAWA, Hiroshi, Tokyo 103-0013 (JP); NAKAYAMA, Hitoshi, Tokyo 103-0013 (JP); KOJIMA, Yuki, Tokyo 103-0013 (JP)
(74) Representative: Bjerkén Hynell KB
(86) International application number: PCT/JP2023/038910
(87) International publication number: WO 2024/090564

(57) **Abstract**

This wireless device comprises: a housing that includes a first space and a second space which are electrically isolated from each other; a first transceiver that is accommodated in the first space and that operates on a first frequency band; and a second transceiver that is accommodated in the second space and that operates on a second frequency band.

## Description

### Technical Field

The present disclosure relates to a wireless apparatus.

### Background Art

Wireless systems using various wireless schemes are widely used on a daily basis. In order to effectively utilize the wireless systems, an apparatus equipped with a plurality of wireless devices in the same housing has been studied.

### Citation List

### Patent Literature

PTL 1
Japanese Unexamined Patent Application Publication (Translation of PCT Application) No. 2015-513265

### Summary of Invention

### Technical Problem

However, there is room for consideration regarding the suppression of radio wave interference occurring between a plurality of wireless devices in the same housing.

### Solution to Problem

A wireless apparatus according to an aspect includes: a housing that includes a first space and a second space electrically isolated from each other; a first wireless device that is housed in the first space and operates in a first frequency band; and a second wireless device that is housed in the second space and operates in a second frequency band.

### Advantageous Effects of Invention

According to a non-limiting aspect of the present disclosure, it is possible to suppress radio wave interference occurring between a plurality of wireless devices.

### Brief Description of Drawings

FIG. 1 is a diagram illustrating an exemplary configuration of a wireless communication apparatus according to Embodiment 1 of the present disclosure;
FIG. 2 is a diagram illustrating an exemplary internal configuration of the wireless communication apparatus according to Embodiment 1 of the present disclosure;
FIG. 3 is a diagram illustrating an exemplary configuration of a wireless communication apparatus according to Embodiment 2 of the present disclosure;
FIG. 4 is a diagram illustrating an exemplary configuration of a wireless communication apparatus according to Embodiment 3 of the present disclosure;
FIG. 5 is a diagram illustrating an exemplary configuration of a wireless communication apparatus according to Embodiment 4 of the present disclosure;
FIG. 6 is a diagram illustrating an exemplary configuration of a wireless communication apparatus according to Embodiment 5 of the present disclosure;
FIG. 7 is a diagram illustrating a first example of an internal configuration of a wireless communication apparatus according to a variation of an embodiment of the present disclosure; and
FIG. 8 is a diagram illustrating a second example of the internal configuration of the wireless communication apparatus according to the variation of the embodiment of the present disclosure.

### Description of Embodiments

Hereinafter, embodiments will be described with reference to the drawings as appropriate. The same elements are denoted by the same reference numerals throughout the present specification in its entirety unless otherwise noted. The matters described below together with the accompanying drawings are provided for describing an exemplary embodiment and not for indicating a sole embodiment. For example, in a case where an order of operations is indicated in the embodiment, the order of operations may be appropriately changed as long as there is no inconsistency as a whole operation.

In a case where a plurality of embodiments and/or variations is exemplified, some configurations, functions and/or operations in a given embodiment and/or variation may be included in another embodiment and/or variation or may be replaced with corresponding configurations, functions and/or operations in another embodiment and/or variation as long as there is no inconsistency.

Further, a detailed description more than necessary may be omitted in the embodiment. For example, a detailed description of a publicly-known or well-known technical matter may be omitted in order to facilitate the understanding of those skilled in the art by avoiding unnecessary redundancy of a description and/or an ambiguous technical matter or concept. Further, a duplicate description for a substantially identical configuration, function and/or operation may be omitted.

The accompanying drawings and the following description are provided in order to aid in the understanding of the embodiment, and are not intended to limit the subject matter described in the claims. Further, the terms used in the following description may also be appropriately replaced with other terms in order to aid those skilled in the art in their understanding.

### (Findings Leading to Present Disclosure)

Wireless systems using wireless schemes of various frequency bands are widely used on a daily basis. For example, in a wireless communication system of a wireless system, there are wireless communications using the same frequency band or wireless communications using frequency bands at least a part of which overlaps with one another. In order to effectively utilize wireless communication with a limited apparatus size, a wireless apparatus equipped with a plurality of wireless devices operated in the same frequency band in one housing has been studied.

When a plurality of wireless devices operated in the same frequency band is mounted in the same housing, transmission characteristics deteriorate due to radio wave interference between the wireless devices.

For example, in a case where one wireless device performs a transmission process of transmitting a signal and the other wireless device performs a reception process of receiving a signal, the wireless device that performs the reception process receives radio wave interference from a signal leaking from the wireless device that performs the transmission process and/or a signal transmitted by the wireless device that performs the transmission process.

For example, a method has been studied in which frequency bands used by a plurality of wireless devices are divided into subbands, and a plurality of wireless devices operated in the same frequency band is allocated to the subbands, thereby suppressing radio wave interference. In this method, each wireless device transmits or receives a signal of the allocated subband using a band-pass filter, thereby suppressing radio wave interference caused by a signal of an unallocated subband.

However, in the method of allocating a subband to each of the wireless devices, a subband that can be used for each of the wireless devices is fixed, and the plurality of wireless devices cannot use the same subband. Thus, the frequency cannot be effectively used, resulting in lowering the efficiency in frequency utilization. Furthermore, in the method of allocating a subband to each of the wireless devices, the cutoff characteristic of the band-pass filter that passes the signal for each subband is gradual, and thus the provision of a gap band between adjacent subbands is necessary, which results in an ineffective use of frequencies.

In the present disclosure, a method will be described for suppressing radio wave interference occurring between a plurality of wireless devices in a wireless apparatus equipped with a plurality of wireless devices operated in the same frequency band in a single housing. According to the present disclosure, it is possible to suppress radio wave interference occurring between a plurality of wireless devices without lowering the efficiency in frequency utilization.

### (Embodiment 1)

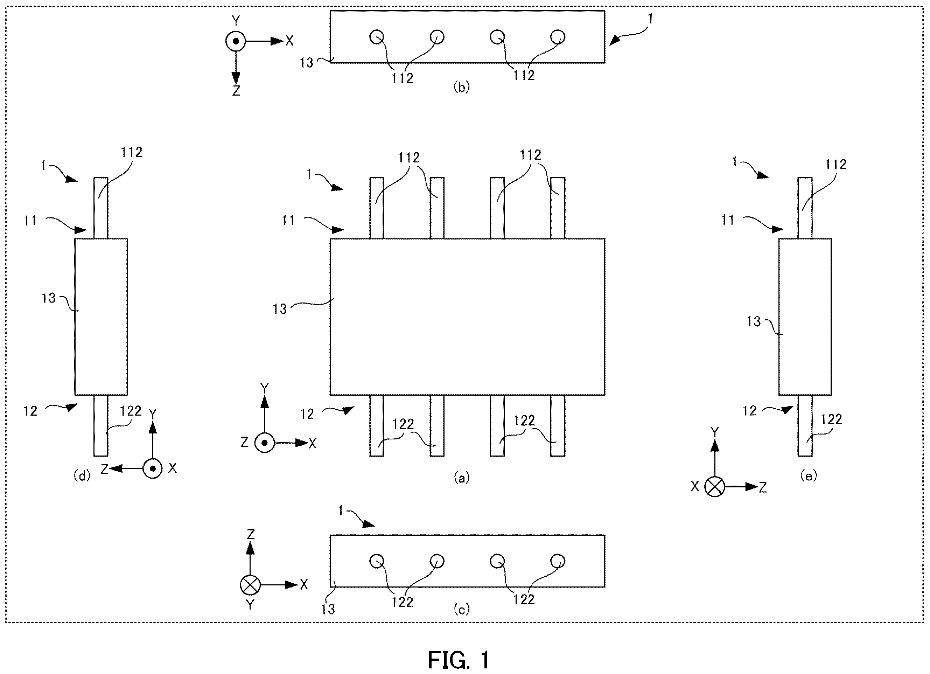

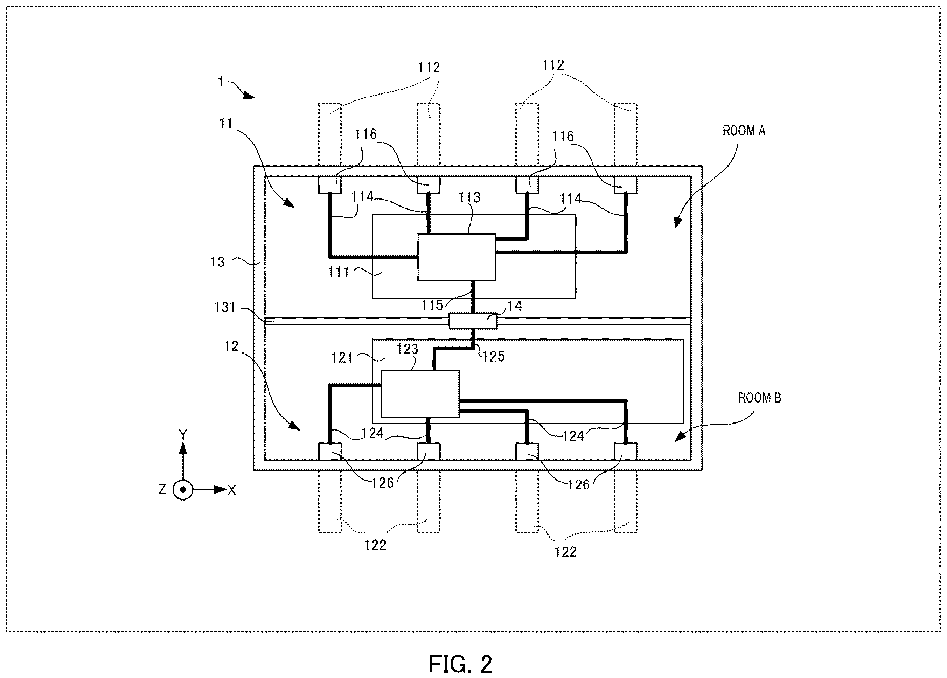

FIG. 1 is a diagram illustrating an exemplary configuration of wireless communication apparatus 1 according to Embodiment 1. FIG. 2 is a diagram illustrating an exemplary internal configuration of wireless communication apparatus 1 according to Embodiment 1.

In FIG. 1, five plan views of (a), (b), (c), (d) and (e) are illustrated. In FIGS. 1 and 2, the X-axis, the Y-axis, and the Z-axis are illustrated.

The part (a) in FIG. 1 is an X-Y plan view of wireless communication apparatus 1 as viewed from the positive direction of the Z-axis. Hereinafter, the X-Y plan view (a) of wireless communication apparatus 1 viewed from the positive direction of the Z-axis is sometimes referred to as a front view (a) of wireless communication apparatus 1. The part (b) in FIG. 1 is an X-Z plan view of wireless communication apparatus 1 as viewed from the positive direction of the Y-axis. The part (c) in FIG. 1 is an X-Z plan view of wireless communication apparatus 1 as viewed from the negative direction of the Y-axis. The part (d) in FIG. 1 is a Z-Y plan view of wireless communication apparatus 1 as viewed from the positive direction of the X-axis. The part (e) in FIG. 1 is a Z-Y plan view of wireless communication apparatus 1 as viewed from the negative direction of the X-axis.

Hereinafter, the positive direction and the negative direction of the Y-axis are defined as "upper" and "lower," respectively, and the positive direction and the negative direction of the X-axis are defined as "right" and "left," respectively. In this case, (b), (c), (d), and (e) in FIG. 1 correspond to a top view, a bottom view, a right side view, and a left side view of wireless communication apparatus 1, respectively.

It should be noted that "upper," "lower," "left," and "right" defined herein need not correspond to the direction in which wireless communication apparatus 1 is installed. For example, wireless communication apparatus 1 may be installed so that the positive direction of the Y-axis coincides with the upper direction, or may be installed so that the positive direction of the Y-axis coincides with the lower direction. Alternatively, wireless communication apparatus 1 may be installed so that the positive direction of the Y-axis coincides with the right direction, or may be installed so that the positive direction of the Y-axis coincides with the left direction.

Wireless communication apparatus 1 includes wireless device 11, wireless device 12, and housing 13.

Wireless devices 11 and 12 operate in the same frequency band. In other words, wireless devices 11 and 12 transmit and receive signals of the same frequency band. By way of example, wireless devices 11 and 12 operate in the 5 GHz band. Note that, in the present disclosure, the frequency band in which the wireless devices operate is not limited to the 5 GHz band.

Note that the frequency band in which wireless device 11 operates and the frequency band in which wireless device 12 operates need not be completely the same. For example, the frequency band in which wireless device 11 operates may be the same as at least a part of the frequency band in which wireless device 12 operates. For example, the frequency band in which wireless device 11 operates may include the frequency band in which wireless device 12 operates.

Housing 13 is a rectangular parallelepiped (or six-sided parallelepiped) formed of metal walls. Note that the shape of housing 13 is not limited to a rectangular parallelepiped. For example, the surface of housing 13 as viewed from the positive direction of the Z-axis may have a shape such as a circular shape, an oval shape, or an n-sided polygon shape (N is an integer of three or more). Furthermore, the surface of housing 13 as viewed from the positive direction of the X-axis and/or the Y-axis may have a shape such as a circular shape, an oval shape, or an n-sided polygon shape (N is an integer of 3 or more). The shape of housing 13 may be changed depending on the place where wireless communication apparatus 1 is attached and/or the design of wireless communication apparatus 1.

As illustrated in FIG. 2, housing 13 includes room A and room B inside. Room A and room B may be spaces separated from each other by metal separation wall 131 provided in a middle space of one housing 13. Furthermore, rooms A and B are each covered with a radio wave shield such as a metal and/or a radio wave absorber, and are electrically isolated from each other. For example, the state in which rooms A and B are electrically isolated refers to a state in which radio waves generated inside one of rooms A and B do not leak to the other room, or a state in which the amount of leakage (e.g., the amount of electric power or energy of radio waves) leaking to the other room is suppressed sufficiently low. The radio waves generated in one room correspond to radio waves (or signals) leaking from a configuration (e.g., processing circuit and wiring) of a wireless device provided in the one room. The state in which the amount of leakage of the radio wave leaking to the other room is suppressed sufficiently low may be a state in which the amount of leakage is equal to or less than a predetermined amount, or may be a state in which the influence on the configuration (e.g., processing circuit and wiring) of the wireless device provided in the other room is sufficiently low.

Wireless device 11 is housed in room A, and wireless device 12 is housed in room B. Relay connector 14 is provided between rooms A and B of housing 13. Relay connector 14 is attached to a slit provided in metal separation wall 131.

Wireless device 11 includes circuit board 111, antennas 112, processing circuit 113 provided on circuit board 111, wiring 114 and wiring 115 extending from processing circuit 113, and connection portions 116.

Circuit board 111, processing circuit 113, wiring 114 and 115, and connection portions 116 of wireless device 11 are provided inside room A.

Circuit board 111 is attached to a metal wall in room A. For example, as illustrated in FIG. 2, circuit board 111 is mounted on a surface along the X-Y plane in room A.

Antennas 112 include four dipole antennas. The four dipole antennas are arranged, for example, at intervals of half the length of the wavelength of the operated frequency band. Antennas 112 extend in a direction along the Y-axis and have polarization axes in a direction along the Y-axis. In other words, antennas 112 radiate, in a direction along the X-Z plane, radio waves oscillating in a direction along the Y-axis. Note that the radio waves radiated by antennas 112 may be radiated in a predetermined angular range with respect to the X-Z plane. Furthermore, in antennas 112, nulls are directed in the positive and the negative directions of the Y-axis. In other words, the sizes of the radio waves radiated by antennas 112 in the positive and the negative directions of the Y-axis is smaller than a predetermined level.

Processing circuit 113 is, for example, a wireless module. Processing circuit 113 performs signal processing on a signal in a frequency band in which wireless device 11 operates. Processing circuit 113 generates a transmission signal and transmits the generated transmission signal from antennas 112. Further, processing circuit 113 performs reception processing on a reception signal received by antennas 112.

Connection portions 116 are terminals provided for antennas 112. Wiring 114 connects processing circuit 113 and antennas 112 via connection portions 116. Thus, processing circuit 113 outputs signals to antennas 112 via wiring 114 and connection portions 116.

Wireless device 12 includes circuit board 121, antennas 122, processing circuit 123 provided on circuit board 121, wiring 124 and wiring 125 extending from processing circuit 123, and connection portions 126. Circuit board 121, processing circuit 123, wiring 124 and 125, and connection portions 126 of wireless device 12 are provided inside room B.

Circuit board 121 is attached to a metal wall in room B. For example, as illustrated in FIG. 2, circuit board 121 is mounted on a surface along the X-Y plane in room B.

Antennas 122 include four dipole antennas. The four dipole antennas are arranged, for example, at intervals of half the length of the wavelength of the operated frequency band. Antennas 122 extend in a direction along the Y-axis and have polarization axes in a direction along the Y-axis. In other words, antennas 122 radiate, in a direction along the X-Z plane, radio waves oscillating in a direction along the Y-axis. Note that the radio waves radiated by antennas 122 may be radiated in a predetermined angular range with respect to the X-Z plane. Furthermore, in antennas 122, nulls are directed in the positive and the negative directions of the Y-axis. In other words, the sizes of the radio waves radiated by antennas 122 in the positive and the negative directions of the Y-axis is smaller than a predetermined level.

Processing circuit 123 is, for example, a wireless module. Processing circuit 123 performs signal processing on a signal in a frequency band in which wireless device 12 operates. Processing circuit 123 generates a transmission signal and transmits the generated transmission signal from antennas 122. Further, processing circuit 123 performs reception processing on a reception signal received by antennas 122.

Connection portions 126 are terminals provided for antennas 122. Wiring 124 connects processing circuit 123 and antennas 122 via connection portions 126. Thus, processing circuit 123 outputs signals to antennas 122 via wiring 124 and connection portions 126.

Wiring 115 and wiring 125 are connected to each other via relay connector 14. Signals are transmitted and received between processing circuits 113 and 123 via wiring 115, relay connector 14, and wiring 125.

In wireless communication apparatus 1 illustrated in FIGS. 1 and 2, circuit board 111, processing circuit 113, wiring 114 and 115, and connection portions 116 of wireless device 11 are provided in room A of housing 13, and circuit board 121, processing circuit 123, wiring 124 and 125, and connection portions 126 of wireless device 12 are provided in room B of housing 13. Then, room A and room B are electrically isolated from each other. Thus, for example, it is possible to suppress radio wave interference caused by the signal that is outputted from processing circuit 113 of wireless device 11 and passes through wiring 114 and/or wiring 115 being transmitted to processing circuit 123, wiring 124, wiring 125, and the like of wireless device 12.

Further, in wireless communication apparatus 1 illustrated in FIGS. 1 and 2, the surface on which antennas 112 are provided and the surface on which antennas 122 are provided are different from each other. In other words, antennas 112 and antennas 122 are drawn out from different surfaces of the surfaces of housing 13. Note that, in the present embodiment, the surface from which antennas 112 are drawn out and the surface from which antennas 122 are drawn out are surfaces that face and are parallel to each other, and are also parallel to metal separation wall 131.

Further, in wireless communication apparatus 1 illustrated in FIGS. 1 and 2, nulls are directed in the negative direction of the Y-axis in antennas 112 of wireless device 11, and nulls are directed in the positive direction of the Y-axis in antennas 122 of wireless device 12. This makes it possible to suppress radio wave interference caused by the signal transmitted from antennas 112 being received by antennas 122. Similarly, radio wave interference caused by the signal transmitted from antennas 122 being received by antennas 112 can also be suppressed.

As described above, in wireless communication apparatus 1, the configurations of two wireless devices (e.g., processing circuit and wiring) are provided in different rooms, and the two rooms are electrically isolated from each other by a metal wall or the like. Furthermore, in wireless communication apparatus 1, antennas 112 and antennas 122 protrude from the respective rooms, face each other, and are arranged while directing nulls to each other. That is, antennas 112 direct nulls to the direction of antennas 122, and antennas 122 direct nulls to the direction of antennas 112. In other words, antennas 112 and antennas 122 direct nulls toward metal separation wall 131.

This configuration makes it possible to suppress radio wave interference caused by a signal of one wireless device to the other wireless device. For example, the configurations of the two wireless devices are provided in the respective rooms that are electrically isolated by metal separation wall 131 or the like, which makes it possible to suppress the radio wave interference in housing 13 caused by a signal that propagates through the circuit of one wireless device leaking to the circuit of the other wireless device. Furthermore, nulls of antennas 112 are directed to antennas 122, and nulls of antennas 122 are directed to antennas 112, thereby suppressing the radio wave interference caused by the radio wave radiated by one antenna (e.g., antennas 112) to the other antenna (e.g., antennas 122).

Moreover, this configuration eliminates the need of dividing the frequency band for the wireless devices using the same frequency band into subbands, thereby improving the efficiency in frequency utilization and enhancing the degree of freedom in frequency selection. For example, it is also possible to determine the use of each room such that room A is for a backhaul line and room B is for an access line, and to use the wireless device of each room in the same communication scheme and in a close frequency band. In the present embodiment, the communication for the backhaul line establishes a mesh communication environment having a mesh-like wireless link formed between wireless devices and includes communication for defining a transfer route at that time. In the mesh communication according to the present embodiment, the route is reconfigured in real time according to the status of the communication between wireless devices, and it is thus necessary to secure communication at all times in order to configure the transfer route. This communication needs to be secured separately from the access line from the user. Instead of using different frequency bands separately, the same frequency bands as the access line such as 2.4 GHz band, 5.2 GHz band, 5.3 GHz band, 5.6 GHz band, 5.8 GHz band, and 6GHz band are shared with the mesh communication, so that the frequency can be effectively used. In a case where a frequency band for the backhaul line needs to be secured separately from those for the access line, the frequency band for the mesh communication cannot be secured when all available frequency bands are allocated to the access line. Alternatively, in this case, when frequency bands are completely separately allocated as frequency bands for the access line and frequency bands for the mesh communication, frequency bands to be allocated to the access lines, where communication traffic becomes concentrated or sparse, are limited. In the present disclosure, the same frequency band as the access line can be used as the frequency band used for communication for the backhaul line. This eliminates the need of configuring band gaps between subbands compared with the scheme in which, as in the conventional technique, the same frequency band is divided into subbands, the subbands are respectively allocated to wireless devices, and each wireless device removes unnecessary reception radio waves by a band-pass filter. Thus, the available frequency bands can be utilized more efficiently. Furthermore, in the mesh communication environment, the signals of the access line are organized to be transmitted and received under the control of the backhaul line, and thus the risk of radio wave interference occurring between the signals of the access line is low. Meanwhile, since the signal of the backhaul line and the signal of the access line are not necessarily organized to be transmitted and received, their coexistence can cause significant adverse effects by the radio wave interference. Therefore, by integrating the wireless device for the backhaul line and the wireless device for the access line in the antenna box of the same housing and suppressing the radio wave interference between the wireless devices, a mesh communication environment can be established by installing a single type of a wireless device, which is significantly effective since it is not required to separately install wireless devices for the backhaul link and the access link.

Note that the configurations of wireless devices 11 and 12 described above are merely examples, and the present disclosure is not limited thereto. Wireless devices 11 and 12 may have configurations not illustrated in FIGS. 1 and 2. For example, although a configuration has been exemplified in which wireless devices 11 and 12 each include one processing circuit (e.g., wireless module), they may include two or more processing circuits.

Furthermore, some configurations (e.g., signal processing circuit and/or power supply circuit) may be shared between wireless device 11 in room A and wireless device 12 in room B. In this case, when a configuration shared between the two wireless devices and provided in one room outputs a signal (e.g., signal that supplies a data signal or a power supply), the outputted signal may be transmitted across the room to the wireless device in the other room via wiring 115, wiring 125, and relay connector 14. By sharing some configurations when the amount of data to be communicated is not large, a processing circuit and the like can be reduced, thereby reducing the manufacturing cost of the wireless communication apparatus and reducing power consumption during operation. Exemplarily, instead of processing circuit 113, at least an analog-to-digital (A/D) and/or digital-to-analog (D/A) converter is installed in room A, and the signal exchanged between rooms A and B via relay connector 14 may be a digital signal. In this case, the configuration related to digital signal processing can be shared between rooms A and B. Particularly, regarding radio wave interference, not only the antenna that emits radio waves but also the wiring connecting the antenna outside the housing and the wiring inside the housing emits radio waves inside the housing, and thus the D/A converter that converts digital signals to analog signals is placed in both rooms A and B, and all circuits handling analog signals may be placed in each room. In this embodiment, the circuit handling digital signals is placed in room A where the wireless device for the access line from the user is placed, and the analog circuit for the backhaul line is placed in room B. Although not distinguished in the figure, room A for the access line from the user is equipped with analog circuits for 2.4 GHz and 5 GHz bands for user convenience, while room B for the backhaul line is equipped only with an analog circuit for the 5 GHz band, and does not have an analog circuit for the 2.4 GHz band. This is because the communication of the backhaul line does not need to consider various terminals (e.g., terminals using the 2.4 GHz band), and wireless devices can be arranged so as to ensure a communication environment, whereby no particular problem occurs even if only the analog circuit for the 5 GHz band, which has a relatively short range of a radio wave, is equipped, and not mounting the analog circuit for the 2.4GHz band can reduce costs. In contrast, in the access line where various users connect using various terminals, it is necessary to consider the presence of terminals that do not support 5 GHz band communication, and since the communication environment constantly changes, analog circuits for multiple frequency bands may be equipped to allow the selection of the appropriate communication environment each time. Additionally, the configuration related to signal processing of the carrier wave frequency band (e.g., upconverter, downconverter, filter, or the like) may be exemplarily installed in room A, and the signal exchanged between rooms A and B via relay connector 14 may be a baseband signal. In this case, the configuration related to baseband signal processing can be shared between rooms A and B. Here, as illustrated, metal separation wall 131 is in a positional relationship overlapping with relay connector 14. Housing 13 has a structure having a dividing line in the X-Y plane and is divided vertically. Metal separation wall 131 is also divided in the X-Y plane. The circuit board equipped with analog and digital circuits is placed at approximately the same position as the dividing line in the Z-axis direction. From the perspective of radio wave shielding, it is ideal for metal separation walls 131 to have no gaps when assembled vertically, but as described above, wiring is necessary to transmit signals from room A to room B. The actual surface of the circuit board has irregularities, and there is a risk of electric leakage due to contact between the wiring on the circuit board and metal separation wall 131 that is formed of metal and deterioration caused by the contact friction. In this embodiment, metal separation wall 131 is superimposed at the position of relay connector 14 connecting rooms A and B, and metal separation wall 131 is designed to fit relay connector 14 built into an insulating case having a flat shape, thus minimizing the gap at the joint of metal separation wall 131. The total of the thickness of the insulating case of the relay connector and the separation distance between the relay connector and metal separation wall 131 is preferred not to exceed 1/N (N is a natural number of 1 or more) of the wavelength of the radio waves emitted by antennas 112 and 122, and in this embodiment, it is set to a distance not exceeding 1/16 of the 5 GHz wavelength.

### (Embodiment 2)

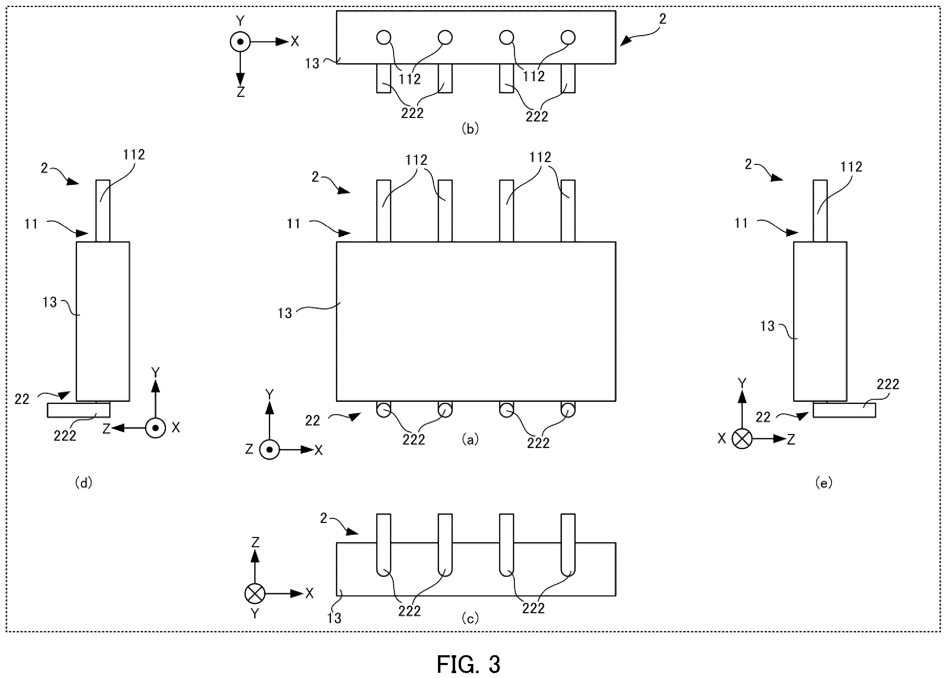

FIG. 3 is a diagram illustrating an exemplary configuration of wireless communication apparatus 2 according to Embodiment 2. In FIG. 3, the same configurations as in FIGS. 1 and 2 are denoted by the same reference numerals, and descriptions thereof are omitted. In FIG. 3, the X-axis, the Y-axis, and the Z-axis are illustrated as in FIGS. 1 and 2. Furthermore, similar to FIG. 1, (a), (b), (c), (d), and (e) in FIG. 3 respectively correspond to the front view, the top view, the bottom view, the right side view, and the left side view of wireless communication apparatus 2.

Wireless communication apparatus 2 includes wireless device 11, wireless device 22, and housing 13. Antennas 222 of wireless device 22 are different from antennas 122 of wireless device 12 described in Embodiment 1. The configurations of wireless device 22 excluding the configuration of antennas 222 may be the same as those of wireless device 12. Furthermore, the internal configuration of wireless communication apparatus 2 may be the same as the internal configuration of wireless communication apparatus 1 illustrated in FIG. 2.

Antennas 222 of wireless device 22 include four dipole antennas. Antennas 222 extend in the positive direction of the Z-axis and have polarization axes in a direction along the Z-axis. In other words, antennas 222 radiate, in a direction along the X-Y plane, radio waves oscillating in a direction along the Z-axis. Note that the radio waves radiated by antennas 222 may be radiated in a predetermined angular range with respect to the X-Y plane. In this case, the polarization axes of antennas 112 of wireless device 11 is a direction along the Y-axis, and thus the polarization axes of antennas 222 are orthogonal to the polarization axes of antennas 112.

As described above, in wireless communication apparatus 2, the configurations of the two wireless devices are provided in different rooms, and the two rooms are electrically isolated from each other by a metal wall or the like. Furthermore, in wireless communication apparatus 2, the polarization axes of antennas 112 are orthogonal to the polarization axes of antennas 222.

This configuration makes it possible to suppress interference caused by a signal of one wireless device to the other wireless device. For example, the configurations of the two wireless devices are provided in the respective rooms that are electrically isolated by the metal wall or the like, which makes it possible to suppress the radio wave interference with the circuit of the other wireless device caused by leakage of a signal propagating through the circuit of one wireless device in housing 13. Further, since the polarization axes of antennas 112 are orthogonal to the polarization axes of antennas 222, the radio wave interference caused by the radio wave radiated by one antenna (e.g., antennas 112) to the other antenna (e.g., antennas 222) can be suppressed.

Moreover, this configuration eliminates the need of dividing the frequency band for the wireless devices using the same frequency band into subbands, thereby improving the efficiency in frequency utilization and enhancing the degree of freedom in frequency selection.

### (Embodiment 3)

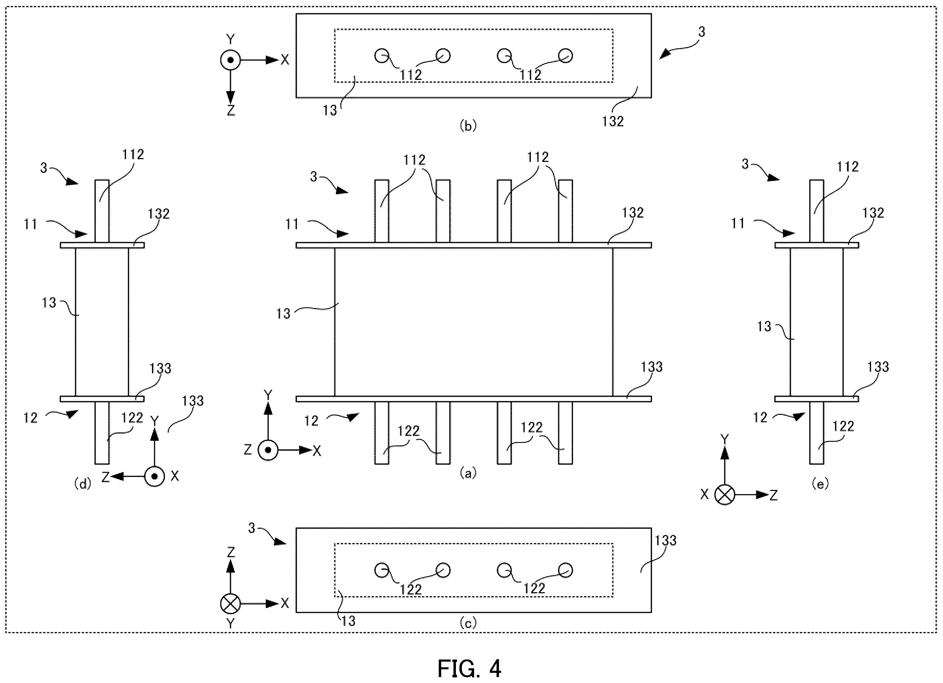

FIG. 4 is a diagram illustrating an exemplary configuration of wireless communication apparatus 3 according to Embodiment 3. Note that, in FIG. 4, the same configurations as in FIGS. 1 and 2 are denoted by the same reference numerals, and descriptions thereof are omitted. In FIG. 4, the X-axis, the Y-axis, and the Z-axis are illustrated as in FIGS. 1 and 2. Furthermore, similar to FIG. 1, (a), (b), (c), (d), and (e) in FIG. 4 respectively correspond to the front view, the top view, the bottom view, the right side view, and the left side view of wireless communication apparatus 3.

Wireless communication apparatus 3 includes wireless device 11, wireless device 12, and housing 13. Furthermore, in wireless communication apparatus 3, metal outer walls 132 and 133 are provided on housing 13. The configurations of wireless communication apparatus 3 excluding metal outer walls 132 and 133 provided on housing 13 may be the same as those of wireless communication apparatus 1. In addition, the internal configuration of wireless communication apparatus 3 may be the same as the internal configuration of wireless communication apparatus 1 illustrated in FIG. 2.

Metal outer wall 132 is an outer wall made of metal and provided along the X-Z plane in which antennas 112 are provided. Providing metal outer wall 132 increases the size of the outer wall along the X-Z plane in which antennas 112 are provided compared to the size of housing 13 along the X-Z plane (see top view (b)). Note that the material of metal outer wall 132 may be the same as or different from that of housing 13.

Metal outer wall 133 is an outer wall made of metal and provided along the X-Z plane in which antennas 122 are provided. Providing metal outer wall 133 increases the size of the outer wall along the X-Z plane in which antennas 122 are provided compared to the size of housing 13 along the X-Z plane (see bottom view (c)). The material of metal outer wall 133 may be the same as or different from that of housing 13. Furthermore, the material of metal outer wall 133 may be the same as or different from that of metal outer wall 132.

In this configuration, metal outer walls 132 and 133 each form a portion extended in a direction protruding from housing 13, which suppresses the reception of the signals transmitted from antennas 112 by antennas 122 and the reception of the signals transmitted from antennas 122 by antennas 122.

As described above, in wireless communication apparatus 3, the configurations of the two wireless devices are provided in different rooms, and the two rooms are electrically isolated from each other by a metal wall or the like. In wireless communication apparatus 3, antennas 112 direct nulls in the direction of antennas 122 and antennas 122 direct nulls in the direction of antennas 112. Furthermore, in wireless communication apparatus 3, the outer wall along the X-Z plane is extended by metal outer walls 132 and 133.

This configuration makes it possible to suppress radio wave interference caused by a signal of one wireless device to the other wireless device. For example, the configurations of the two wireless devices are provided in the respective rooms that are electrically isolated by the metal wall or the like, which makes it possible to suppress the radio wave interference with the circuit of the other wireless device caused by leakage of a signal propagating through the circuit of one wireless device in housing 13. Furthermore, the nulls of antennas 112 are directed to antennas 122 and the nulls of antennas 122 are directed to antennas 112, thereby suppressing the radio wave interference caused by the radio wave radiated by one antenna (e.g., antennas 112) to the other radio wave (e.g., antennas 122). Moreover, metal outer walls 132 and 133 provided on housing 13 extend the X-Z planes of housing 13, which can block or decrease the radio wave radiated by one antenna (e.g., antennas 112) and directed to the other antenna (e.g., antennas 122), resulting in further suppression of radio wave interference.

In addition, this configuration eliminates the need of dividing the frequency band for the wireless devices using the same frequency band into subbands, thereby improving the efficiency in frequency utilization and enhancing the degree of freedom in frequency selection.

Note that, in Embodiment 3, metal outer walls 132 and 133 are both provided, but one of metal outer walls 132 and 133 may be provided, and the other need not be provided.

Furthermore, in Embodiment 3, metal outer walls 132 and 133 are separate from housing 13, but one or both of metal outer walls 132 and 133 may be integrally formed with housing 13. In other words, the surface of housing 13 on which antennas 112 are provided and/or the surface of housing 13 on which antennas 122 are provided may be extended in a direction protruding from housing 13.

### (Embodiment 4)

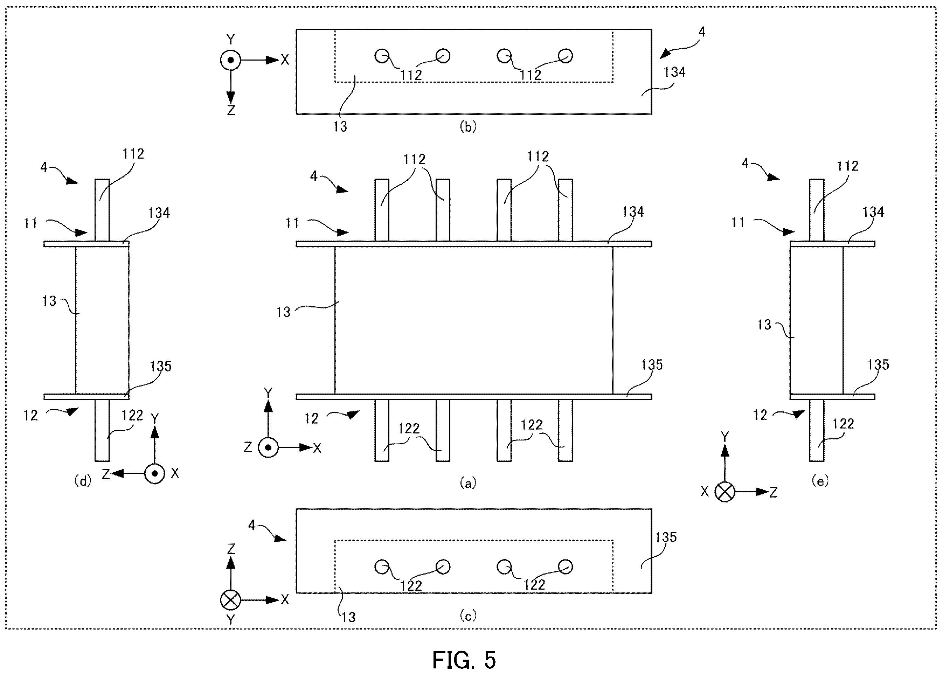

FIG. 5 is a diagram illustrating an exemplary configuration of wireless communication apparatus 4 according to Embodiment 4. Note that, in FIG. 5, the same configurations as in FIGS. 1 and 2 are denoted by the same reference numerals, and descriptions thereof are omitted. In FIG. 5, the X-axis, the Y-axis, and the Z-axis are illustrated as in FIGS. 1 and 2. Furthermore, similar to FIG. 1, (a), (b), (c), (d), and (e) in FIG. 5 respectively correspond to the front view, the top view, the bottom view, the right side view, and the left side view of wireless communication apparatus 4.

Wireless communication apparatus 4 includes wireless device 11, wireless device 12, and housing 13. Furthermore, in wireless communication apparatus 4, metal outer walls 134 and 135 are provided on housing 13. The configurations of wireless communication apparatus 4 excluding metal outer walls 134 and 135 provided on housing 13 may be the same as those of wireless communication apparatus 1. In addition, the internal configuration of wireless communication apparatus 4 may be the same as the internal configuration of wireless communication apparatus 1 illustrated in FIG. 2.

Metal outer wall 134 is an outer wall made of metal and provided along the X-Z plane in which antennas 112 are provided. Providing metal outer wall 134 increases the size of the outer wall along the X-Z plane in which antennas 112 are provided compared to the size of housing 13 along the X-Z plane. Then, metal outer wall 134 extends the outer wall along the X-Z plane in which antennas 112 are provided in the positive direction of the Z-axis, the positive direction of the X-axis, and the negative direction of the X-axis, but does not extend the outer wall in the negative direction of the Z-axis (see top view (b)). Note that the material of metal outer wall 134 may be the same as or different from that of housing 13.

Metal outer wall 135 is an outer wall made of metal and provided along the X-Z plane in which antennas 122 are provided. Providing metal outer wall 135 increases the size of the outer wall along the X-Z plane in which antennas 122 are provided compared to the size of housing 13 along the X-Z plane. Then, metal outer wall 135 extends the outer wall along the X-Z plane in which antennas 122 are provided in the positive direction of the Z-axis, the positive direction of the X-axis, and the negative direction of the X-axis, but does not extend the outer wall in the negative direction of the Z-axis (see bottom view (c)). The material of metal outer wall 135 may be the same as or different from that of housing 13. Furthermore, the material of metal outer wall 135 may be the same as or different from that of metal outer wall 134.

In this configuration, metal outer wall 134 and metal outer wall 135 each form a portion extended in a direction protruding from housing 13, which suppresses the reception of the signals transmitted from antennas 112 by antennas 122 and the reception of the signals transmitted from antennas 122 by antennas 122. Further, in this configuration, of the two surfaces of housing 13 along the X-Y plane, the surface on the side of the negative direction of the Z-axis can be a surface having no protruding portion (extended portion), which makes the attachment easier when wireless communication apparatus 4 is attached to a surface such as a wall surface.

As described above, in wireless communication apparatus 4, the configurations of the two wireless devices are provided in different rooms, and the two rooms are electrically isolated from each other by a metal wall or the like. Furthermore, in wireless communication apparatus 4, antennas 112 direct nulls in the direction of antennas 122 and antennas 122 direct nulls in the direction of antennas 112. Moreover, in wireless communication apparatus 4, metal outer walls 134 and 135 extend the outer wall along the X-Z plane while maintaining the plane along one of the surfaces constituting housing 13 as a flat plane.

This configuration makes it possible to suppress radio wave interference caused by a signal of one wireless device to the other wireless device. For example, the configurations of the two wireless devices are provided in the respective rooms that are electrically isolated by the metal wall or the like, which makes it possible to suppress the radio wave interference with the circuit of the other wireless device caused by leakage of a signal propagating through the circuit of one wireless device in housing 13. Furthermore, the nulls of antennas 112 are directed to antennas and the nulls of antennas 122 are directed to antennas 112, thereby suppressing the radio wave interference caused by the radio wave radiated by one antenna (e.g., antennas 112) to the other radio wave (e.g., antennas 122). Moreover, metal outer walls 134 and 135 provided on housing 13 extend the X-Z planes of housing 13, which can block or decrease the radio wave radiated by one antenna (e.g., antennas 112) and directed to the other antenna (e.g., antennas 122), resulting in further suppression of radio wave interference. In addition, one of the surfaces of housing 13 can be a surface that does not have a protruding portion (extended portion), which makes the attachment easier when wireless communication apparatus 4 is attached to a surface such as a wall surface.

Furthermore, this configuration eliminates the need of dividing the frequency band for the wireless devices using the same frequency band into subbands, thereby improving the efficiency in frequency utilization and enhancing the degree of freedom in frequency selection.

Note that, in Embodiment 4, metal outer walls 134 and 135 are both provided, but one of metal outer walls 134 and 135 may be provided, and the other need not be provided.

Note that Embodiment 4 describes an example in which, of the two surfaces of housing 13 along the X-Y plane, the surface on the side of the negative direction of the Z-axis is a surface having no protruding portion (extended portion), but the present disclosure is not limited thereto. For example, at least one of the two surfaces of housing 13 along the Z-Y plane may be a surface having no protruding portion (extended portion).

Furthermore, in Embodiment 4, metal outer wall 134 and metal outer wall 135 are separate from housing 13, but one or both of metal outer wall 134 and metal outer wall 135 may be integrally formed with housing 13. In other words, the surface of housing 13 on which antennas 112 are provided and/or the surface of housing 13 on which antennas 122 are provided may be extended in a direction protruding from housing 13. In this case, the surface of housing 13 on which antennas 112 are provided and/or the surface on which antennas 122 are provided may be extended so as not to protrude from at least one of lines in contact with the surfaces different from the surface of housing 13 on which antennas 112 are provided and the surface on which antennas 122 are provided.

### (Embodiment 5)

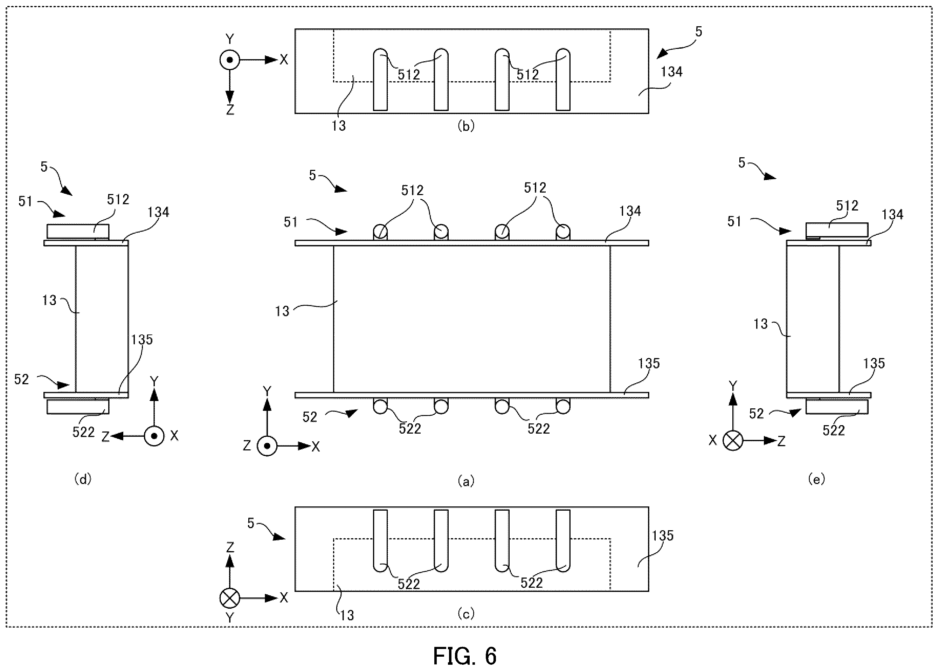

FIG. 6 is a diagram illustrating an exemplary configuration of wireless communication apparatus 5 according to Embodiment 5. Note that, in FIG. 6, the same components as those in FIGS. 1, 2, and 5 are denoted by the same reference numerals, and descriptions thereof are omitted. Furthermore, in FIG. 6, the X-axis, the Y-axis, and the Z-axis are illustrated as in FIGS. 1 and 2. In addition, similar to FIG. 1, (a), (b), (c), (d), and (e) in FIG. 6 respectively correspond to the front view, the top view, the bottom view, the right side view, and the left side view of wireless communication apparatus 5.

Wireless communication apparatus 5 includes wireless device 51, wireless device 52, and housing 13. Furthermore, in wireless communication apparatus 5, similar to wireless communication apparatus 4, metal outer walls 134 and 135 are provided on housing 13. Antennas 512 of wireless device 51 are different from antennas 112 of wireless device 11. The configurations of wireless device 51 excluding antennas 512 may be the same as those of wireless device 11. Antennas 522 of wireless device 52 are different from antennas 122 of wireless device 12. The configurations of wireless device 52 excluding antennas 522 may be the same as those of wireless device 12. In addition, the internal configuration of wireless communication apparatus 5 may be the same as the internal configuration of wireless communication apparatus 1 illustrated in FIG. 2.

Antennas 512 of wireless device 51 include four dipole antennas. Antennas 512 extend in the positive direction of the Z-axis and have polarization axes in a direction along the Z-axis. In other words, antennas 222 radiate, in a direction along the X-Y plane, radio waves oscillating in a direction along the Z-axis. Note that the radio waves radiated by antennas 222 may be radiated in a predetermined angular range with respect to the X-Y plane.

Antennas 522 of wireless device 52 include four dipole antennas. Antennas 522 extend in the positive direction of the Z-axis and have polarization axes in a direction along the Z-axis. In other words, antennas 222 radiate, in a direction along the X-Y plane, radio waves oscillating in a direction along the Z-axis. Note that the radio waves radiated by antennas 222 may be radiated in a predetermined angular range with respect to the X-Y plane.

As described above, in wireless communication apparatus 5, the configurations of the two wireless devices are provided in different rooms, and the two rooms are electrically isolated from each other by a metal wall or the like. Furthermore, in wireless communication apparatus 5, metal outer walls 134 and 135 extend the outer wall along the X-Z plane while maintaining the plane along one of the surfaces constituting housing 13 as a flat plane.

This configuration makes it possible to suppress radio wave interference caused by a signal of one wireless device to the other wireless device. For example, the configurations of the two wireless devices are provided in the respective rooms that are electrically isolated by the metal wall or the like, which makes it possible to suppress the radio wave interference with the circuit of the other wireless device caused by leakage of a signal propagating through the circuit of one wireless device in housing 13. Furthermore, in wireless communication apparatus 5, metal outer walls 134 and 135 provided on housing 13 extend the X-Z plane of housing 13, which can block or decrease the radio wave radiated by one antenna (e.g., antennas 512) and directed to the other antenna (e.g., antennas 522), resulting in suppression of radio wave interference, even when the polarization axes of antennas 512 are not orthogonal to the polarization axes of antennas 522. Moreover, antennas 512 and antennas 522 extend in the positive direction of the Z-axis, so that the size of wireless communication apparatus 5 in the Y-axis direction is reduced. Thus, wireless communication apparatus 5 can be installed in a narrower space, improving the degree of freedom in the installation location.

Note that, in each of the above-described embodiments, an example is shown in which the antennas of the two wireless device both include four dipole antennas, but the present disclosure is not limited thereto. In each embodiment, the antennas of the two wireless devices may be configured differently from each other. For example, the antennas of one wireless device may include two dipole antennas and the antennas of the other wireless device may include four monopole antennas. For example, in each embodiment, the number of antennas, the types of antennas, the shapes of antennas, and the characteristics of antennas of the two wireless devices are not limited to the above-described examples. The number of antennas may be three or less, or five or more. A plurality of antennas may each function as an array antenna. Furthermore, an antenna different from a dipole antenna, such as a monopole antenna, a collinear antenna, or a patch antenna, may be used for the antenna of the wireless device.

Note that, in the above-described embodiments, the antennas of the two wireless devices are provided on the outer walls of housing 13 along the X-Z planes different from each other, but the present disclosure is not limited thereto. For example, of the antennas of the two wireless devices, the antennas of one wireless device may be provided on the outer wall of housing 13 along the X-Y plane, and the antennas of the other wireless device may be provided on the outer wall of housing 13 along the X-Z plane. In this case, as described in Embodiment 1, the antennas of the one wireless device provided on the outer wall of housing 13 along the X-Y plane and the antennas of the other wireless device provided on the outer wall of housing 13 along the X-Z plane may direct nulls to each other. Alternatively, as shown in Embodiment 2, the polarization axes of the antennas of the one wireless device provided on the outer wall of housing 13 along the X-Y plane and the polarization axes of the antennas of the other wireless device provided on the outer wall of housing 13 along the X-Z plane may be orthogonal to each other.

Note that the internal configuration in each of the above-described embodiments is merely an example, and the present disclosure is not limited thereto. For example, one of the two wireless devices, each of which exemplarily includes a circuit board and a processing circuit in each of the above-described embodiment, may include a circuit board and a processing circuit, and the other may be controlled by the circuit board and the processing circuit of the one wireless device.

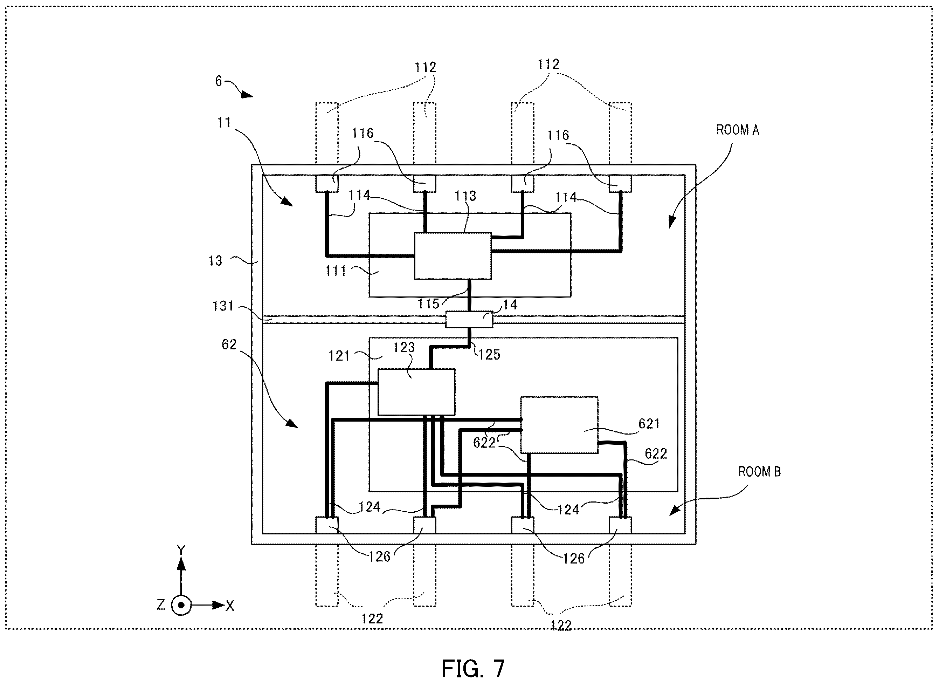

Furthermore, in each of the embodiments described above, an example has been shown in which two wireless devices are mounted in one housing, but three or more wireless devices may be mounted in one housing. Moreover, a wireless device operating in a plurality of frequency bands may be mounted in one housing. Hereinafter, an exemplary internal configuration of a wireless device operating in a plurality of frequency bands will be described with reference to FIG. 7.

FIG. 7 is a diagram illustrating a first example of an internal configuration of wireless communication apparatus 6 according to a variation of an embodiment. Note that, in FIG. 7, the same configurations as in FIGS. 1 and 2 are denoted by the same reference numerals, and descriptions thereof are omitted.

Wireless device 62 is provided in room B of housing 13 in FIG. 7. Wireless device 62 operates in two frequency bands. In other words, wireless device 62 transmits and receives signals of two frequency bands. By way of example, wireless device 62 operates in two frequency bands of the 5 GHz band and the 2.4 GHz band. In other words, wireless device 62 may have a configuration including a wireless device for the 5 GHz band and a wireless device for the 2.4 GHz band. Since a wireless device for the 5 GHz band and a wireless device for the 2.4 GHz band hardly cause radio wave interference with each other, placing the two wireless devices in one room is less likely to cause a problem. Placing such wireless devices that are less likely to cause a problem in the same room can miniaturize the wireless communication apparatus. In addition, a mechanism or the like of a heat dissipation system (not shown) can be shared between the wireless devices placed in the same room, thereby reducing the manufacturing cost. As described above, the wireless devices that are less likely to cause radio wave interference are placed in the same room, and only the wireless device that may cause radio wave interference is placed in another room, whereby the wireless communication apparatus can be miniaturized while preventing radio wave interference. In addition, the wireless device for the 5 GHz band and the wireless device for the 2.4 GHz band in room B share antennas 122. Wireless devices that are less likely to cause radio wave interference may be placed in the same room in this manner and may share antennas extending from the room.

Wireless device 62 has a configuration in which processing circuit 621 and wiring 622 are added to wireless device 12.

Processing circuit 621 is a wireless module that performs signal processing in a frequency band different from those of processing circuits 113 and 123. For example, processing circuit 621 performs signal processing in the 2.4 GHz band. Processing circuit 621 generates transmission signals and transmits the generated transmission signals in the 2.4 GHz band from antennas 122. Furthermore, processing circuit 621 performs reception processing on the received signals in the 2.4 GHz band received by antennas 122.

Wiring 622 connects processing circuit 621 and antennas 122 via connection portions 126. This allows processing circuit 621 to output signals to antennas 122 via wiring 622 and connection portions 126.

As described above, wireless communication apparatus 6 is equipped with a wireless device that operates in a plurality of frequency bands.

Note that, in wireless communication apparatus 6, antennas 122 are exemplarily shared between processing circuits 123 and 621 in wireless device 62, but the present disclosure is not limited thereto. For example, wireless device 62 may include antennas that transmit and/or receive signals processed by processing circuit 621, in addition to antennas 122 that transmit and/or receive signals processed by processing circuit 123. In this case, the arrangement of the antennas that transmit and/or receive the signals processed by processing circuit 621 may be an arrangement in which nulls are directed to antennas 112 or an arrangement in which nulls are not directed to antennas 112. For example, in a case where the frequency band in which processing circuit 621 performs signal processing (e.g., 2.4 GHz band) and the frequency band in which processing circuit 113 performs signal processing (e.g., 5 GHz band) are less likely to cause radio wave interference, the arrangement of the antennas for transmitting and/or receiving the signals processed by processing circuit 621 may be an arrangement in which nulls are not directed to antennas 112.

Note that, in each of the above-described embodiments, the internal configuration of housing 13 is the same as that in FIG. 2, but the present disclosure is not limited thereto. Hereinafter, variations of the wireless communication apparatus in which the internal configuration of housing 13 is different from those of the above-described embodiments will be described.

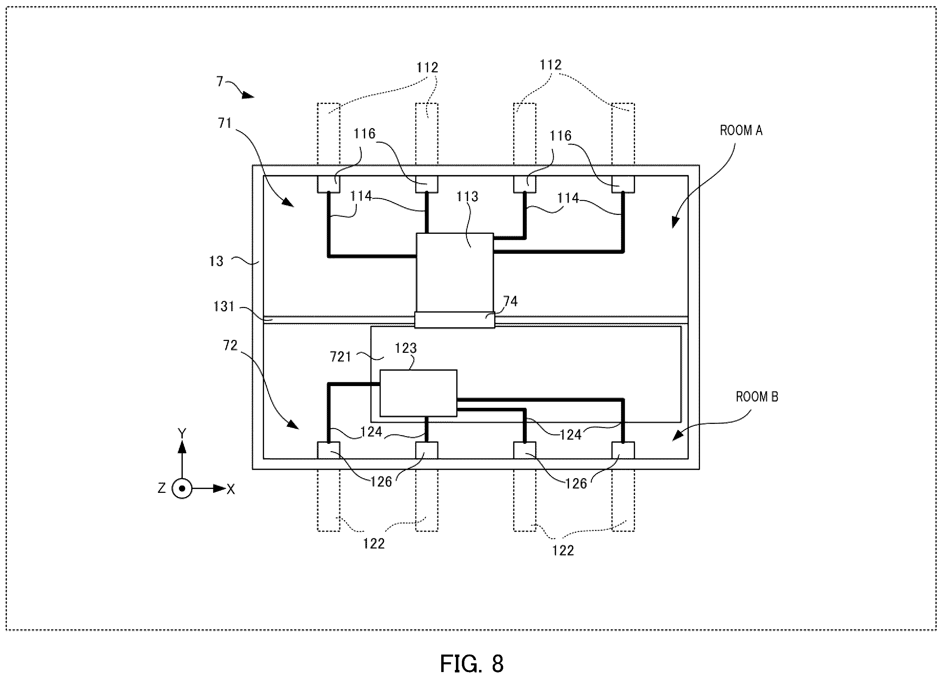

FIG. 8 is a diagram illustrating a second example of an internal configuration of wireless communication apparatus 7 according to a variation of an embodiment. Note that, in FIG. 8, the same configurations as in FIGS. 1 and 2 are denoted by the same reference numerals, and descriptions thereof are omitted.

In wireless communication apparatus 7, wireless devices 11 and 12 in wireless communication apparatus 1 are replaced with wireless devices 71 and 72, respectively.

Wireless devices 71 and 72 operate in the same frequency band as wireless devices 11 and 12, respectively.

Wireless device 71 includes antennas 112, processing circuit 113, wiring 114 extending from processing circuit 113, and connection portions 116. Wireless device 71 is different from wireless device 11 in that wireless device 71 does not include circuit board 111 and wiring 115.

Wireless device 72 includes circuit board 721, antennas 122, processing circuit 123 provided on circuit board 721, wiring 124 extending from processing circuit 123, and connection portions 126. Wireless device 72 is different from wireless device 12 in that circuit board 121 is replaced with circuit board 721 and does not include wiring 125.

Relay connector 74 is directly attached to circuit board 721. Relay connector 74 is provided between room A and room B of housing 13. For example, relay connector 74 is disposed on a slit provided in metal separation wall 131.

Processing circuit 113 is directly attached to relay connector 74. In other words, no wiring is provided between processing circuit 113 and relay connector 74.

By directly attaching processing circuit 113 to relay connector 74 that is directly attached to circuit board 721, the circuit board (e.g., circuit board 111 (see FIG. 2)) and wiring (e.g., wiring 115 and wiring 125 (see FIG. 2)) of the wireless device can be omitted, the configuration of the wireless communication apparatus can be simpler, and the costs related to the manufacturing of the wireless communication apparatus can be reduced.

Although FIG. 8 illustrates an example in which wireless devices 11 and 12 of wireless communication apparatus 1 in Embodiment 1 are replaced with wireless devices 71 and 72, respectively, the wireless devices of the wireless communication apparatus in an embodiment other than Embodiment 1 may be replaced with wireless devices 71 and 72.

Note that the internal configuration of housing 13 is not limited to the example illustrated in FIGS. 2, 7, and 8. For example, processing circuit 113 may be directly connected to circuit board 121 via a slit provided in metal separation wall 131 without through circuit board 111.

Furthermore, a configuration or method for electrical isolation between wireless devices (or a plurality of rooms in which wireless devices are housed) in housing 13 is not limited to the above-described example. For example, at least one or a combination of two or more of the following configurations or methods may be used.

For example, in a state in which a gap is formed in a through-hole for a wireless module formed in metal separation wall 131 that partitions a space into rooms, a configuration in which the gap is firmly closed without a gap with a radio wave absorber or the like may be adopted. For example, in FIGS. 2 and 7, a configuration may be adopted in which a gap between relay connector 14 attached to a slit (an example of a through-hole) of metal separation wall 131 and metal separation wall 131 is firmly closed without a gap with a radio wave absorber or the like. Alternatively, in FIG. 8, a configuration may be adopted in which a gap between relay connector 74 attached to the slit of metal separation wall 131 and metal separation wall 131 is firmly closed without a gap with a radio wave absorber or the like. These configurations make it possible to suppress radio wave leakage from the gap of the metal separation wall between rooms. For example, there is a limit to the accuracy of metal processing in manufacturing of housing 13 including metal separation wall 131, and thus a slight gap is possibly generated. Even when such a slight gap is generated, radio wave leakage can be suppressed by closing the gap with a radio wave absorber.

Note that the method (or configuration) for closing the gap is not particularly limited, and for example, the gap may be closed using a sheet-shaped radio wave absorber. The sheet-shaped radio wave absorber, which is flexible and easy to be processed, can fill the gap even when the gap of the metal wall has a complicated shape. Alternatively, a method of filling the gap with a material capable of absorbing radio waves in the form of a gel or a paste may be employed.

Furthermore, as a configuration for electrical isolation, a configuration may be adopted in which the wireless module (e.g., processing circuit) is covered with a radio wave shield (or an electromagnetic shield or an electromagnetic wave shield). For example, in FIGS. 2 and 8, processing circuit 113 of wireless device 11 and processing circuit 123 of wireless device 12 may each be covered with a radio wave shield. Moreover, for example, in FIG. 7, processing circuit 113 of wireless device 11 and processing circuits 123 and 621 of wireless device 62 may each be covered with a radio wave shield. Note that, in the example of FIG. 7, the configuration may be such that processing circuit 123 and processing circuit 621 are covered with one radio wave shield, or such that processing circuit 123 and processing circuit 621 are individually covered with radio wave shields. The wireless modules as the sources of radio waves (e.g., processing circuits) are covered with a radio wave shield(s) in this manner, thereby suppressing the leakage of radio waves from the sources.

Note that, in a case where two wireless modules are included as illustrated in FIGS. 2 and 8, both of the two wireless modules may be covered with radio wave shields, or one of the two wireless modules may be covered with a radio wave shield, and the other need not be covered with a radio wave shield. Radio waves possibly leak from the wireless module that is not covered with the radio wave shield in a case where one of the wireless modules is covered with the radio wave shield and the other wireless module is not covered with the radio wave shield, but the wireless module that is covered with the radio wave shield is extremely unlikely to be affected by the leaked radio waves due to the radio wave shield.

Furthermore, a wireless module (e.g., processing circuit), an RF connector (e.g., relay connector), and an RF cable (e.g., wiring) may be housed in a single box made of metal (hereinafter, referred to as a metal box), and antenna connectors (e.g., connection portions) may protrude from the metal box.

For example, in FIG. 2, circuit board 111, processing circuit 113, wiring 114, and wiring 115 of wireless device 11, and the terminal of relay connector 14 on the side of wireless device 11 may be housed in a single metal box (hereinafter, referred to as a metal box of wireless device 11). In this case, connection portions 116 may protrude directly from the metal box of wireless device 11. Furthermore, in FIG. 2, circuit board 121, processing circuit 123, wiring 124, and wiring 125 of wireless device 12, and the terminal of relay connector 14 on the side of wireless device 12 may be housed in a single metal box (hereinafter, referred to as a metal box of wireless device 12). In this case, connection portions 126 may protrude directly from the metal box of wireless device 12. Furthermore, for example, in FIG. 8, processing circuit 113 and wiring 114 of wireless device 71, and the terminal of relay connector 74 on the side of wireless device 71 may be housed in a single metal box (hereinafter, referred to as a metal box of wireless device 71). In this case, connection portions 116 may protrude directly from the metal box of wireless device 71. Furthermore, in FIG. 8, circuit board 721, processing circuit 123, and wiring 124 of wireless device 72, and the terminal of relay connector 74 on the side of wireless device 72 may be housed in a single metal box (hereinafter, referred to as a metal box of wireless device 72). In this case, connection portions 126 may protrude directly from the metal box of wireless device 72.

The configuration of providing a metal box in each room in the housing thus makes it possible to suppress leakage of radio waves other than the radio waves radiated from the antenna ends from one of the adjacent metal boxes to the other.

Note that, in a case where two wireless devices are included in a wireless communication apparatus as illustrated in FIGS. 2 and 8, a metal box may be provided for each of the two wireless devices, or a metal box may be provided for one of them and no metal box may be provided for the other. For example, in a case where a metal box is provided for wireless device 11 and no metal box is provided for wireless device 12 in FIG. 2, radio waves possibly leak from processing circuit 123 of wireless device 12, but wireless device 11 is extremely unlikely to be affected by the radio waves leaked from wireless device 12 because of the metal box.

Note that, in the above description, a configuration or method for electrical isolation between wireless devices (or a plurality of rooms in which wireless devices are housed) in a case where a wireless communication apparatus include two wireless devices has been described, but the present disclosure is not limited thereto. For example, a wireless communication apparatus may include three or more wireless devices.

In the case where the wireless communication apparatus includes three or more wireless devices, a housing of the wireless communication apparatus may include rooms in which the three or more wireless devices are individually housed. Then, in this case, similar to the example in which the wireless communication apparatus includes two wireless devices, a configuration or method for electrical isolation between the three or more wireless devices (or rooms in which the three or more wireless devices are individually housed) may be adopted.

Note that, in the above description, an example has been described in which the wireless communication apparatus has a configuration for suppressing interference between antennas and a configuration for suppressing interference in the housing, but these configurations may be applied independently of each other. For example, in wireless communication apparatus 1 illustrated in FIGS. 1 and 2, as a configuration for suppressing interference between antennas, a configuration is applied in which nulls are directed in the negative direction of the Y-axis by antennas 112 of wireless device 11 and nulls are directed in the positive direction of the Y-axis by antennas 122 of wireless device 12. Furthermore, in wireless communication apparatus 1, as a configuration for suppressing interference in the housing, a configuration is applied in which room A in which wireless device 11 is provided and room B in which wireless device 12 is provided are electrically isolated. However, these configurations may be applied independently of each other. For example, in wireless communication apparatus 1, a configuration for suppressing interference between antennas, that is, a configuration in which antennas 112 of wireless device 11 direct nulls in the negative direction of the Y-axis and antennas 122 of wireless device 12 direct nulls in the positive direction of the Y-axis, need not be applied. Similarly, for example, in wireless communication apparatus 2 illustrated in FIG. 3, a configuration in which the polarization axes of antennas 112 are orthogonal to the polarization axes of antennas 222 is applied as a configuration for suppressing interference between antennas, but this configuration need not be applied.

In other words, in the present disclosure, the wireless communication apparatus need not have both a configuration for suppressing interference between antennas and a configuration for suppressing interference in the housing. In other words, the wireless communication apparatus need not have a configuration for suppressing interference between antennas, and may have a configuration for suppressing interference in the housing. In a case where it is not necessary to have a configuration for suppressing interference between antennas, for example, the surface of the housing from which the antennas of each wireless device protrude and/or the directions of the antennas need not be limited to the above-described example. In a case where the surface of the housing from which the antennas of each wireless device protrude and/or the directions of the antennas are not limited, the degree of freedom regarding the position and orientation of the antennas increases. For example, in this case, since the positions and/or the orientations of the antennas of each of the three or more wireless devices can be designed relatively freely, the wireless communication apparatus can include three or more wireless devices. Note that, in the case where the wireless communication apparatus includes three or more wireless devices, one housing may include rooms for individually housing the three or more wireless devices. Then, in this case, similar to the example in which the wireless communication apparatus includes two wireless devices, a configuration or method for electrical isolation between the three or more wireless devices (or rooms in which the three or more wireless device are individually housed) may be adopted.

Note that, in each of the above-described embodiments, a wireless communication apparatus equipped with wireless devices that perform wireless communication has been described as an example, but the present disclosure is not limited thereto. For example, the present disclosure may be applied to a wireless apparatus equipped with wireless devices for a wireless system different from the wireless communication (e.g., radar system or sensing system).

Furthermore, in each of the above-described embodiments, the frequency bands in which two wireless devices operate have been described. In the following description, the two wireless devices included in the wireless communication apparatus in each embodiment are referred to as a first wireless device and a second wireless device, the frequency band in which the first wireless device operates is referred to as a first frequency band, and the frequency band in which the second wireless device operates is referred to as a second frequency band. In each of the above-described embodiments, the first frequency band and the second frequency band are exemplarily the same frequency band or frequency bands partially overlapping with each other, but the present disclosure is not limited thereto. The first frequency band need not overlap with the second frequency band, or may be different from the second frequency band. The first frequency band may be adjacent to the second frequency band with a specific interval. The specific interval is not particularly limited.

For example, even in a case where the first frequency band and the second frequency band do not overlap with each other, an Automatic Gain Control (AGC) circuit of the second wireless device reacts to a relatively large reception wave received from the first wireless device when a strong radio wave from the first wireless device enters the second wireless device. This reaction possibly deteriorates the received Signal to Noise (SN) radio of a relatively weak radio wave that the second wireless device should receive. Furthermore, in this case, a large radio wave flows backward to the transmission amplifier of the second wireless device, which possibly causes a spurious wave due to the nonlinearity of the transmission amplifier.

According to each of the embodiments described above, even when the first frequency band and the second frequency band do not overlap with each other, the configurations of the two wireless devices are provided in different rooms in the housing of the wireless communication apparatus, and the two rooms are electrically isolated by a metal wall or the like. This configuration makes it possible to suppress radio wave interference with the circuit of the second wireless device caused by leakage of a signal propagating through the circuit of the first wireless device. For example, it is possible to suppress the reaction of the AGC circuit included in the circuit configuration (e.g., processing circuit) of the second wireless device to the reception wave from the first wireless device. In addition, generation of a spurious wave from the transmission amplifier included in the circuit configuration of the second wireless device can be suppressed. Furthermore, these suppression effects are further strengthened for the following reason. That is, the first antennas extending to the outside of the housing while making contact with the first room in which the first wireless device is provided, and the second antennas extending to the outside of the housing while making contact with the second room in which the second wireless device is provided direct nulls to each other, and thus radio wave interference caused by radio waves entering from one room to the other room through the outside of the housing can also be suppressed. Note that these suppression effects can be further strengthened also in a configuration in which the polarization axes of the first antennas and the polarization axes of the second antennas are orthogonal to each other as exemplified in Embodiment 2. Furthermore, these suppression effects can be further strengthened also when a configuration in which the outer walls of the housing are extended to block the path of the radio wave propagating outside the housing is adopted as exemplified in Embodiments 3, 4, and 5.

In addition, in each of the above-described embodiments, an example has been described in which each of the two wireless devices transmits and receives a signal, but the present disclosure is not limited thereto. For example, at least one of the two wireless devices may transmit a signal and need not receive a signal. Alternatively, at least one of the two wireless devices may receive a signal and need not transmit a signal. Even in such a case, according to the present disclosure, it is possible to suppress radio wave interference received by the wireless device that performs reception of a signal.

Furthermore, the above-described embodiments may be combined as appropriate. For example, housing 13 of wireless communication apparatus 2 described in Embodiment 2 may be provided with metal outer walls 132 and 133 described in Embodiment 3 or metal outer walls 134 and 135 described in Embodiment 4.

Moreover, the above-described embodiments may be configured to be switchable as appropriate. For example, in Embodiment 1, antennas 122 of wireless device 12 may be replaceable with antennas 222 described in Embodiment 2, or the shapes of antennas 122 may be changed to the shapes of antennas 222. Furthermore, metal outer walls 132 and 133 described in Embodiment 3 may be detachably provided, or metal outer walls 134 and 135 described in Embodiment 4 may be detachably provided, for example. In this case, wireless communication apparatus 3 described in Embodiment 3 may be switched to wireless communication apparatus 4 described in Embodiment 4 by removing metal outer walls 132 and 133 and attaching metal outer walls 134 and 135.

The disclosure of Japanese Patent Application No. 2022-172180, filed on October 27, 2022, including the specification, drawings and abstract, is incorporated herein by reference in its entirety.

### Industrial Applicability

The present disclosure is useful in wireless communication systems.

### Reference Signs List

1, 2, 3, 4, 5, 6 Wireless communication apparatus
11, 12, 22, 51, 52, 62, 71, 72 Wireless device
13 Housing
14, 74 Relay connector
131 Metal separation wall
132, 133, 134, 135 Metal outer wall
111, 121, 721 Circuit board
112, 122, 222, 512, 522 Antenna
113, 123, 621 Processing circuit
114, 115, 124, 125, 622 Wiring
116, 126 Connection portion

## Claims

1. A wireless apparatus, comprising:
a housing that includes a first space and a second space electrically isolated from each other;
a first wireless device that is housed in the first space and operates in a first frequency band; and
a second wireless device that is housed in the second space and operates in a second frequency band.

2. The wireless apparatus according to claim 1, wherein
the first wireless device includes a first antenna extending from a first surface of the housing to an outside of the housing, and
the second wireless device includes a second antenna extending from a second surface to the outside of the housing, the second surface being different from the first surface.

3. The wireless apparatus according to claim 2, wherein
the first antenna directs a null in a direction of the second antenna, and
the second antenna directs a null in a direction of the first antenna.

4. The wireless apparatus according to claim 2, wherein
a polarization direction of the first antenna is orthogonal to a polarization direction of the second antenna.

5. The wireless apparatus according to claim 2, wherein
at least one of the first surface and the second surface extends in a direction protruding from the housing.

6. The wireless apparatus according to claim 2, wherein
at least one of the first surface and the second surface extends so as not to protrude from at least one of lines in contact with surfaces of the housing different from the first surface and the second surface.

7. The wireless apparatus according to claim 1, wherein
the first wireless device includes a first processing circuit covered with a radio wave shield, and
the second wireless device includes a second processing circuit covered with a radio wave shield.

8. The wireless apparatus according to claim 1, wherein
the first wireless device includes a first metal box housing: a first processing circuit; first wiring extending from the first processing circuit; and a connection portion connected to the first processing circuit, and
the second wireless device includes a second metal box housing: a second processing circuit; second wiring extending from the second processing circuit; and a connection portion connected to the second processing circuit.
